# EUROPÄISCHE PATENTANMELDUNG

(11) **EP 1 298 515 A2**
(43) Veröffentlichungstag der Anmeldung: **02.04.2003**
(21) Anmeldenummer: 02021114.0
(22) Anmeldetag: 23.09.2002
(51) Int. Cl.: G06F 1/00

(54) **Verfahren zur Steuerung des Zugriffs auf Ressourcen eines Datenverarbeitungssystems**

(30) Priorität: 26.09.2001 DE 10147465
(71) Anmelder: SIEMENS AKTIENGESELLSCHAFT, 80333 München (DE)
(72) Erfinder: Kaiserswerth, Rudolf, 86415 Mering (DE); Kopper, Harald, 82266 Inning (DE); Wagner, Hermann Josef, Dr., 82110 Germering (DE); Weidinger, Rupert, 85659 Forstern (DE); Wildgruber, Rudolf, 80686 München (DE); Woehrl, Rudolf, 85748 Garching (DE)

(57) **Zusammenfassung**

In einem Datenverarbeitungssystems mit zumindest einer Datenverarbeitungsanlage wird eine Mehrzahl von dem Datenverarbeitungssystem zugeordneten Datenbanken mit benutzerindividuellen Daten miteinander zur Bildung einer einzigen resultierenden Benutzerdatenbank verknüpft. Zugriffsberechtigungen für durch die zumindest eine Datenverarbeitungsanlage bereitgestellte Ressourcen werden mittels vordefinierter Benutzerrollen vergeben. Zumindest einem Benutzer des Datenverarbeitungssystems wird zumindest eine Benutzerrolle zugeordnet.

## Beschreibung

Markt- und kundenorientierte Organisationen verändern sich vielfach schneller als Datenverarbeitungssysteme, mit Hilfe derer die Organisationen ihre Geschäftsprozesse abbilden. Hieraus resultieren besondere Anforderungen im Hinblick auf eine Steuerung des Zugriffs auf Ressourcen von Datenverarbeitungssystemen in sich rasch verändernden Organisationseinheiten.

Aus DE 199 54 358 A1 ist ein Verfahren zur Steuerung des Benutzerzugriffs in einer Netzumgebung unter Verwendung von Benutzerrollen bekannt. Eine Benutzerrolle bestimmt die Funktion eines Benutzers innerhalb einer Organisationseinheit und dient der Definition des Umfangs seiner Betriebsverantwortung. Eine Benutzerrollenzugriffssteuerung umfaßt eine oder mehrere Benutzerrollen und Zugriffsberechtigungen, durch die eine Durchführbarkeit von Handlungen an computerbasierten Objekten festgelegt wird. Die Benutzerrollenzugriffssteuerung wird verwendet, um eine Anfrage eines Benutzers zu bewilligen, wenn Benutzerzugriffsrollen einem Benutzer Zugriffsberechtigungen erteilen, die ihn zur Durchführung spezieller Handlungen an einem computerbasierten Objekt berechtigen.

Der vorliegenden Erfindung liegt die Aufgabe zugrunde, ein Verfahren, ein Datenverarbeitungssystem und ein Computerprogramm zur effizienten Steuerung des Zugriffs auf Ressourcen eines Datenverarbeitungssystems mit verschiedenartigen Datenverarbeitungsanlagen, mit verschiedenartigen durch die Datenverarbeitungsanlagen bereitgestellten Programmanwendungen und mit häufigen Benutzerdatenänderungen anzugeben.

Diese Aufgabe wird erfindungsgemäß durch ein Verfahren mit den in Anspruch 1, ein Datenverarbeitungssystem mit den in Anspruch 8 und ein Computerprogramm mit den in Anspruch 9 angegebenen Merkmalen gelöst. Vorteilhafte Weiterbildungen des erfindungsgemäßen Verfahrens sind in den abhängigen Ansprüchen angegeben.

Ein wesentlicher Aspekt der vorliegenden Erfindung besteht darin, daß benutzerindividuelle Daten in einer resultierenden Benutzerdatenbank für im wesentlichen sämtliche Datenverarbeitungsanlagen eines Datenverarbeitungssystems in einer einheitlichen Struktur zugreifbar gemacht werden. Die resultierende Benutzerdatenbank entsteht aus einer Verknüpfung einer Vielzahl von Datenbanken mit benutzerindividuellen Daten. Zu den benutzerindividuellen Daten zählen auch Benutzerrollen als Grundlage einer rollenbasierten Ressourcenzugriffssteuerung. Zielsysteme für die Ressourcenzugriffssteuerung sind die Datenverarbeitungsanlagen des Datenverarbeitungssystems. Insbesondere in Datenverarbeitungssystemen mit heterogenen Zielsystemen und verteilt erfaßten benutzerindividuellen Daten wird durch einheitlich bereitgestellte Benutzerdaten eine Vorraussetzung für eine rollenbasierte Ressourcenzugriffssteuerung geschaffen.

Außerdem bedeutet eine Verwendung rollenbasierter Zugriffssteuerungsmechanismen in einer resultierenden Benutzerdatenbank, auch als Meta-Verzeichnis bekannt, eine Verletzung eines Paradigmas der herkömmlichen Meta-Verzeichnis-Technologie. In der herkömmlichen Meta-Verzeichnis-Technologie sind nämlich keine n:m-Beziehungen im Datenmodell vorgesehen. Diese n:m-Beziehungen sind jedoch für eine rollenbasierte Zugriffssteuerung wegen einer Zuordnung von Benutzern zu Rollen, einer Zuordnung von Rollen zu Zugriffsberechtigungen und einer Zuordnung von Zugriffsberechtigungen zu Ressourcen notwendig.

Die vorliegende Erfindung wird nachfolgend an einem Ausführungsbeispiel anhand der Zeichnung näher erläutert. Es zeigt
- Figur 1: eine schematische Darstellung der Wirkungsweise eines rollenbasierten Ressourcenzugriffssteuerungssystems und
- Figur 2: ein Datenverarbeitungssystem mit mehreren Datenverarbeitungsanlagen und rollenbasierter Ressourcenzugriffssteuerung.
- Figur 3: ein Datenmodell für ein rollenbasiertes Ressourcenzugriffssteuerungssystem

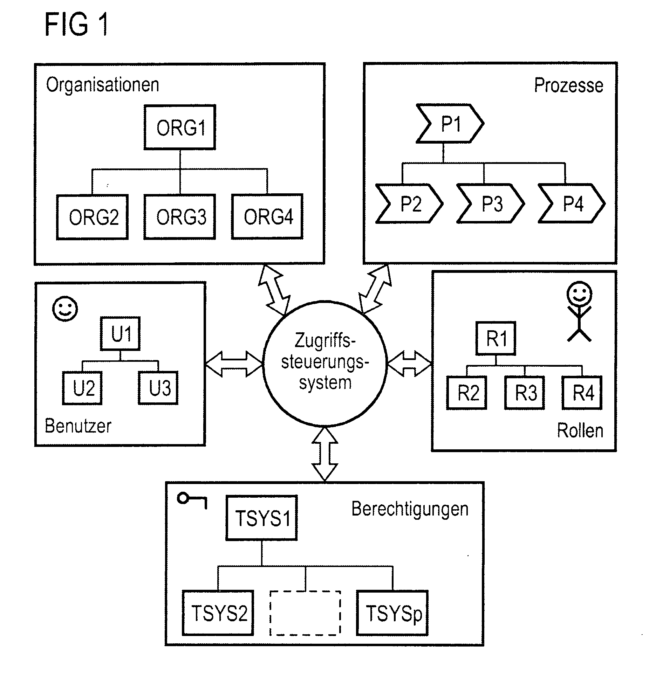

In Figur 1 ist dargestellt, in welches Umfeld ein rollenbasiertes Ressourcenzugriffsteuerungssystem eingebettet ist. Anhand der Zugehörigkeit von Benutzern U1-U3 zu Organisationseinheiten ORG1-ORG4 sowie ihren Verantwortungsbereichen für Geschäftsprozesse P1-P4 sind Rollen R1-R4 definierbar bzw. ableitbar. Über die definierten bzw. abgeleiteten Rollen R1-R4 werden Zugriffsberechtigungen auf Ressourcen eines organisationsweiten Datenverarbeitungssystems mit zahlreichen Datenverarbeitungsanlagen TSYS1-TSYSp gesteuert. Die Datenverarbeitungsanlagen TSYS1-TSYSp bilden dabei Zielsysteme für die rollenbasierte Ressourcenzugriffssteuerung. Im Rahmen der rollenbasierten Ressourcenzugriffssteuerung werden Benutzer U1-U3 zu Rollen R1-R4, Rollen R1-R4 zu Berechtigungen und Berechtigungen zu Ressourcen von Zielsystemen TSYS1-TSYSp zugeordnet. Die Rollen R1-R4 repräsentieren damit ein Bündel von Zugriffsberechtigungen. Nähere Einzelheiten zu rollenbasierten Zugriffssteuerungssystemen sind in David Ferraiolo, Richard Kuhn: "Role Based Access Control", Proceedings of the 15th National Computer Security Conference, 1992, Vol. II, S. 554-563 beschrieben.

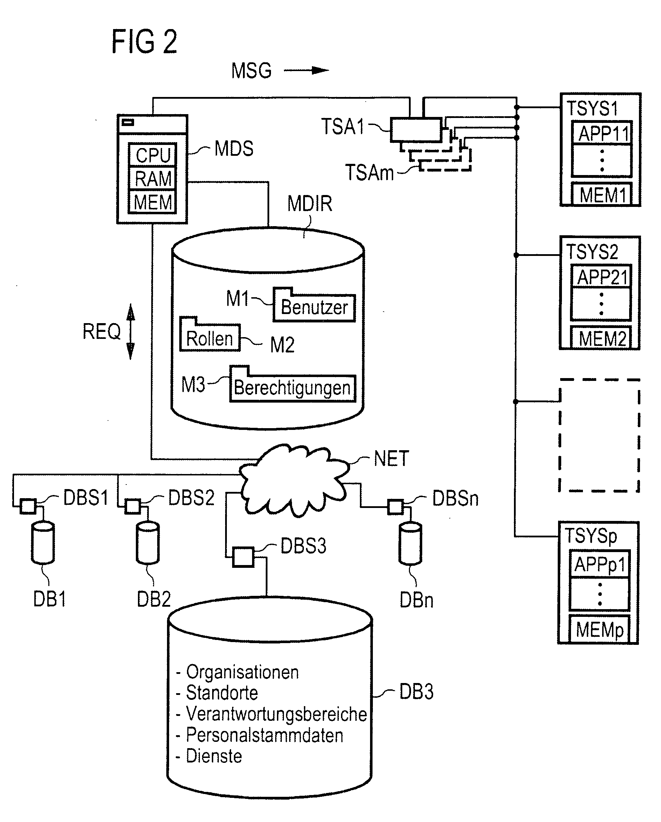

Das in Figur 2 dargestellte Datenverarbeitungssystem weist eine Mehrzahl von Datenbanken DB1-DBn mit benutzerindividuellen Daten wie Organisation, Standorte, Verantwortungsbereiche, Personalstammdaten und verfügbare Dienste auf. Die benutzerindividuellen Daten sind in den einzelnen Datenbanken DB1-DBn nicht notwendigerweise entsprechend einer einheitlichen Datenstruktur gespeichert. Zur Bildung einer einzigen resultierenden Benutzerdatenbank MDIR, nachfolgend als Meta-Verzeichnis bezeichnet, werden die einzelnen Datenbanken miteinander verknüpft. Zur Verknüpfung werden in den einzelnen Datenbanken DB1-DBn gespeicherte Daten entsprechend einem Gesamtdatenmodell umgesetzt. Etwaige Datenredundanzen in den einzelnen Datenbanken DB1-DBn werden bei einer Datenmigration in das Meta-Verzeichnis MDIR eliminiert. Bei einer Änderung von benutzerindividuellen Daten in den einzelnen Datenbanken DB1-DBn oder im Meta-Verzeichnis MDIR erfolgt eine Synchronisation zwischen den einzelnen Datenbanken DB1-DBn und dem Meta-Verzeichnis MDIR. Zur Synchronisation des Meta-Verzeichnisses MDIR mit den einzelnen Datenbanken DB1-DBn werden Synchronisationsanforderungen REQ zwischen einem dem Meta-Verzeichnis MDIR zugeordneten Server MDS, nachfolgend als Meta-Verzeichnis-Server bezeichnet, und Datenbankservern DBS1-DBSn ausgetauscht, die den einzelnen Datenbanken DB1-DBn zugeordnet sind. Die Synchronisationsanforderung REQ werden dabei über ein Datennetz NET übertragen, das die Datenbankserver DBS1-DBSn mit dem Meta-Verzeichnis-Server MDS verbindet.

Das Meta-Verzeichnis MDIR weist Speicherbereiche M1-M3 mit Benutzerstammdaten, Rollendefinitionen und Zugriffsberechtigungen für Ressourcen auf. Zu den Ressourcen zählen Programmanwendungen APP11-APPpn und Speicherbereiche MEM1-MEMp, die durch Datenverarbeitungsanlagen TSYS1-TSYSp bereitgestellt werden. Die ressourcenbereitstellenden Datenverarbeitungsanlagen TSYS1-TSYSp werden nachfolgend als Zielsysteme bezeichnet.

Die Zugriffsberechtigungen für die durch die Zielsysteme TSYS1-TSYSp bereitgestellten Ressourcen werden mittels der im Meta-Verzeichnis MDIR gespeicherten vordefinierten Benutzerrollen vergeben. Dabei werden den vordefinierten Benutzerrollen Zugriffsberechtigungen und den Zugriffberechtigungen Ressourcen der Zielsysteme TSYS1-TSYSp zugeordnet. Des weiteren sind im Meta-Verzeichnis MDIR Zuordnungen von Benutzern zu Rollen gespeichert, wodurch den jeweiligen Benutzern die den jeweiligen Rollen zugeordneten Zugriffsberechtigungen gewährt werden. Die Zuordnungen von Benutzern zu Rollen werden im Meta-Verzeichnis MDIR beispielsweise als Teil der Personalstammdaten abgespeichert. Vorteilhafterweise werden die vordefinierten Benutzerrollen mittels eines im Meta-Verzeichnis MDIR abgespeicherten Rollenkataloges zur Zuordnung verfügbar gemacht.

Der Meta-Verzeichnis-Server MDS ist über Schnittstelleneinrichtungen TSA1-TSAm mit den Zielsystemen TSYS1-TSYSp verbunden. Die Schnittstelleneinrichtungen TSA1-TSAm werden nachfolgend Zielsystemagenten genannt. Die Zielsystemagenten TSA1-TSAm lösen Benutzern des Datenverarbeitungssystems zugeordnete Benutzerrollen in applikationsspezifische bzw. betriebssystemspezifische Zugriffsberechtigungen für Programmanwendungen APP11-APPpn und Speicherbereiche MEM1-MEMp auf, die von den Zielsystemen TSYS1-TSYSp bereitgestellt werden. Den Zielsystemagenten TSA1-TSAm kommen somit Koordinierungsfunktionen im Hinblick auf Programmzugriffssteuerung und Datenhaltung in den Zielsystemen TSYS1-TSYSp zu. Zur Ankopplung des Meta-Verzeichnis-Servers MDS an die Programmzugriffssteuerung und die Datenhaltung der Zielsysteme TSYS1-TSYSp, weisen die Zielsystemagenten TSA1-TSAm in Figur 2 nicht explizit dargestellte LDAP-Umsetzer (Lightweight Directory Access Protocol) und API-Zugangsschnittstellen (Application Programming Interface) auf und lösen die Benutzerrollen in Befehlssequenzen auf, die von den jeweiligen Zielsystemen TSYS1-TSYSp interpretierbar sind.

Bei einer Änderung von rollendefinierenden benutzerindividuellen Daten im Meta-Verzeichnis MDIR wird eine Meldung MSG an den jeweiligen Zielsystemagenten TSA1-TSAm übermittelt. Der jeweilige Zielsystemagent TSA1-TSAm überprüft daraufhin die Meldung MSG auf eine Änderung von applikations- bzw. betriebssystemspezifischen Zugriffsberechtigungen, die den jeweiligen Zielsystemen TSYS1-TSYSp gegebenenfalls zu signalisieren sind.

Das vorangehend beschriebene Ressourcenzugriffssteuerungsverfahren wird durch ein Computerprogramm implementiert, das in einen Arbeitsspeicher RAM des Meta-Verzeichnis-Servers MDS ladbar ist und Software-Codeabschnitte aufweist, bei deren Ausführung die vorangehend beschriebenen Schritte eingeleitet werden. Der Meta-Verzeichnis-Server MDS weist ein nichtflüchtiges Speichermedium MEM zur dauerhaften Speicherung des Computerprogramms und eine zentrale Recheneinheit CPU für dessen Ausführung auf.

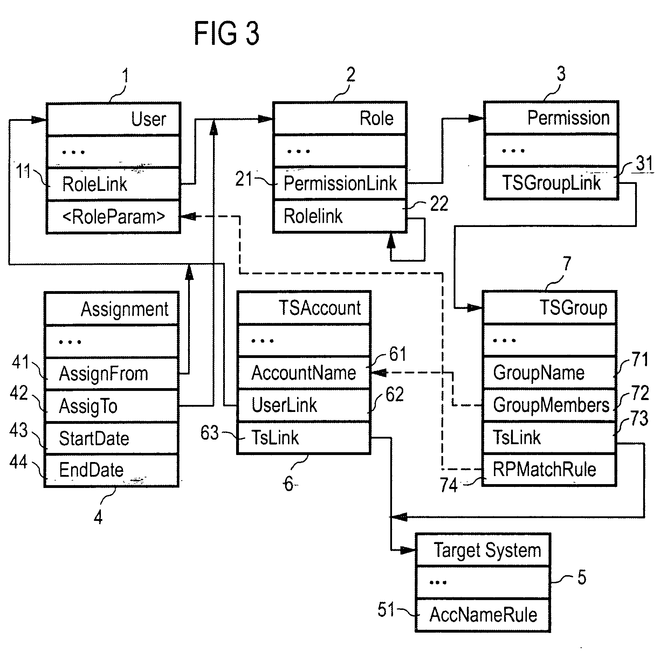

Anhand des in Figur 3 dargestellten Datenmodells wird die datenverarbeitungstechnische Umsetzung eines rollenbasierten Zugriffssteuerungsinformationsmodells in einem Meta-Verzeichnis erläutert. Die nachfolgenden Überlegungen gelten ohne Beschränkung der Allgemeingültigkeit insbesondere für ein Zugriffssteuerungsinformationsmodell entsprechend dem Standard des NIST (National Institute of Standards and Technology) und ein LDAP-Meta-Verzeichnis. Das Standard-Zugriffssteuerungsinformationsmodell des NIST wird nachfolgend als RBAC-Informationsmodell (role based access control) bezeichnet.

Zur Umsetzung des RBAC-Informationsmodelles werden im LDAP-Meta-Verzeichnis folgende Objektklassen definiert:
- Objektklasse "User" 1 mit benutzerspezifischen Attributen, wie Name, Vorname, Telefonnummer etc.,
- Objektklasse "Role" 2 mit rollenspezifischen Attributen, wie Beschreibung, Rollenidentifikator, Rollenklasse etc.,
- Objektklasse "Permission" 3 mit berechtigungsspezifischen Attributen, wie Beschreibung der Berechtigungen und Berechtigungsidentifikator.

In einem Objekt der Objektklasse "Permission" 3 werden Zugriffsberechtigungen zielsystemübergreifend zusammengefaßt.

Für Zuordnungen zwischen Objektinstanzen werden folgende, die Zuordnungen beschreibende Attribute eingeführt:
- Attribut "RoleLink" 11 der Objektklasse "User" 1 zur Zuordnung eines Benutzers zu einer oder mehreren Rollen,
- Attribut "PermissionLink" 21 der Objektklasse "Role" 2 zur Zuordnung einer Rolle zu einem oder mehreren Berechtigungen.

Das Attribut "RoleLink" 11 stellt eine Objektreferenz (Distinguished Name Reference) in einem LDAP-Meta-Verzeichnis dar. Da Attribute in einem LDAP-Meta-Verzeichnis mehrwertig sein können, lassen sich mit den drei Objektklassen "User" 1, "Role" 2 und "Permission" 3 auf einfache Weise die m:n-Beziehungen zwischen Benutzern, Rollen und Berechtigungen im Sinne des RBAC-Informationsmodells umsetzen.

Für eine Unterstützung von Rollenhierarchien enthält die Objektklasse "Role" 2 ebenfalls ein Attribut "RoleLink" 22. Damit lassen sich Hierarchien von Rolleninstanzen generieren. Beispielsweise kann ein Rollenobjekt "Gruppenleiter" über das Attribut "RoleLink" 22 auf ein Rollenobjekt "Mitarbeiter" verweisen und damit die dem Rollenobjekt "Mitarbeiter" zugeordneten Berechtigungen im Sinne des RBAC-Informationsmodells erben.

Für eine Spezifizierung einer Zeitbindung zwischen Benutzern und Rollen wird eine Objektklasse "Assignment" 4 eingeführt. Bei der Objektklasse "Assignment" 4 werden neben Zuordnungen zwischen Benutzern und Rollen auch ein Beginn und ein Ende der jeweiligen Zuordnung angegeben. Dafür enthält die Objektklasse "Assignment" 4 folgende Attribute:
- "AssignFrom" 41 für eine Objektreferenz auf eine Instanz der Objektklasse "User" 1,
- "AssignTo" 42 für eine Objektreferenz auf eine Instanz der Objektklasse "Role" 2,
- "StartDate" 43 für einen Startzeitpunkt der Zuordnung,
- "EndDate" 44 für einen Endzeitpunkt der Zuordnung.

Für eine Unterstützung einer automatischen Verwaltung von Benutzerkennungen, Benutzergruppen und einer Zuordnung von Benutzerkennungen zu Benutzergruppen mittels eines LDAP-Meta-Verzeichnisses werden folgende Objektklassen verwendet:
- "TargetSystem" 5 zur Verwaltung eines spezifischen Zielsystems,
- "TSAccount" 6 zur Abbildung einer Benutzerkennung eines spezifischen Zielsystems,
- "TSGroup" 7 zur Abbildung einer Benutzergruppe eines spezifischen Zielsystems.

Die Objektklasse "Targetsystem" enthält u.a. ein Attribut "AccNameRule" 51 für eine Regel zur Bildung von Benutzerkennungsnamen. Dies dient einer automatischen Anlage von Benutzerkennungen im jeweiligen Zielsystem.

Die Objektklasse "TSAccount" 6 enthält u.a. folgende Attribute:
- "AccountName" 61 für einen Namen einer Benutzerkennung,
- "TSLink" 62 für einen Verweis auf ein Zielsystem, auf dem die Benutzerkennung eingerichtet ist,
- "UserLink" 63 für einen Verweis auf einen Benutzer, dem die Benutzerkennung zugeordnet ist.

Die Objektklasse "TSGroup" 7 enthält u.a. folgende Attribute:
- "GroupName" 71 für einen Namen einer Benutzergruppenkennung
- "GroupMembers" 72 für einen Verweis auf Namen von Benutzerkennungen, die einer Benutzergruppe zugeordnet sind,
- "TSLink" 73 für einen Verweis auf ein Zielsystem, auf dem die Benutzergruppe eingerichtet ist.

Für eine Verbindung einer Vergabe von Zugriffsberechtigungen über das RBAC-Informationsmodell und eine automatische Verwaltung von Benutzerkennungen, Benutzergruppen und einer Zuordnung von Benutzerkennungen zu Benutzergruppen in einem LDAP-Meta-Verzeichnis wird die Objektklasse "Permission" 3 um ein Attribut "TSGroupLink" 31 erweitert. Das Attribut "TSGroupLink" 31 dient einer Zuordnung von zielsystemübergreifenden Berechtigungen zu Benutzergruppen in spezifischen Zielsystemen, also zielsystemspezifischen Berechtigungen.

Für eine Unterstützung von Rollenparametern wird die Objektklasse "TSGroup" um das Attribut "RPMatchRule" 74 erweitert. Das Attribut "RPMatchRule" 74 dient einer Festlegung einer Auswahlregel zur Berücksichtigung einer Benutzergruppe bei einer Berechtigungsvergabe für einen Benutzer, dem spezifische Rollenparameterwerte zugeordnet sind.

Mit dem beschriebenen Datenmodell erfolgt die datenverarbeitungstechnische Umsetzung eines rollenbasierten Zugriffssteuerungsinformationsmodell in einem Meta-Verzeichnis in der nachfolgend beschriebenen Weise.

Zunächst wird ein Benutzer in einer Instanz der Objektklasse "User" 1 abgebildet. Eine Zuordnung von Rollen ohne Zeitbindung erfolgt über das Attribute "RoleLink" 11. Eine Zuordnung von Rollen mit Zeitbindung erfolgt rollenweise über jeweils eine Instanz der Objektklasse "Assignment" 4. Dort werden über die Attribute "AssignFrom" 41 und "AssignTo" 42 die Zuordnung und über die Attribute "StartDate" 43 und "EndDate" 44 die Zeitbindung festgelegt.

Eine Rolle wird in einer Instanz der Objektklasse "Role" 2 abgebildet. Ein Aufbau von Rollenhierarchien erfolgt über das Attribut "RoleLink" 22. Eine Zuordnung von Rollen zu Berechtigungen erfolgt über das Attribut "PermissionLink" 21.

Eine zielsystemübergreifende Berechtigung wird in einer Instanz der Objektklasse "Permission" 3 abgebildet. Eine Zuordnung von Berechtigungen zu Benutzergruppen als zielsystemspezifische Berechtigungen erfolgt über das Attribut "TSGroupLink" 31.

Ein durch die Ressourcezugriffssteuerung verwaltetes Zielsystem wird in einer Instanz der Objektklasse "Targetsystem" 5 abgebildet. Dort wird eine Auswahlregel für die Bildung von Benutzerkennungsnamen festgelegt. Eine zielsystemspezifische Benutzergruppe wird in einer Instanz der Objektklasse "TSGroup" abgebildet.

Durch eine Suche nach dem Namen einer Instanz der Objektklasse "User" 1 über alle Instanzen der Objektklasse "TSAccount" 6 wird ermittelt, in welchen Zielsystemen für einen Benutzer bereits Benutzerkennungen existieren. Außerdem kann zu jedem Zeitpunkt ermittelt werden, welche Rollen einem Benutzer zugeordnet sind. Dazu werden Verweise im Attribut "RoleLink" 11 der Objektklasse "User" 1 ausgewertet. Hieraus ergeben sich Rollenzuordnungen ohne Zeitbindung. Durch eine Auswertung der Attribute "AssignFrom" 41 und "AssignTo" 42 von Instanzen der Objektklasse "Assignment" 4 werden Rollenzuordnungen mit Zeitbindung ermittelt.

Zu jedem Zeitpunkt kann ausgehend von einem Benutzer über dem Benutzer zugeordnete Rollen und den Rollen zugeordnete zielsystemspezifische Zugriffsberechtigungen ermittelt werden, zu welchen Benutzergruppen ein Benutzer zuzuordnen ist. Eine entsprechend Zuordnung erfolgt über eine für das jeweilige Zielsystem spezifische Benutzerkennung. Durch die beschriebene Ermittlung bereits existierender Benutzerkennungen kann überprüft werden, ob in einem bestimmten Zielsystem für den jeweiligen Benutzer bereits eine verwendbare Benutzerkennung eingerichtet ist. Falls noch keine Benutzerkennung eingerichtet ist, kann eine neue Benutzerkennung zur Verwendung angelegt werden. Der Name einer neuen Benutzerkennung wird mit Hilfe des Attributs "AccNameRule" 51 der Objektklasse "TargetSystem" 5 gebildet.

Falls Benutzergruppen ermittelt werden, die aufgrund einer durch das Attribut "RPMatchRule" 74 der Objektklasse "TSGroup" 7 festgelegten Auswahlregel von Rollenparametern abhängen, wird die entsprechende Auswahlregel auf die Benutzerrollenparameterwerte des jeweiligen Benutzers angewendet. Eine Einordnung eines Benutzers in eine Benutzergruppen wird nur dann durchgeführt, wenn die Auswahlregel für die Benutzerrollenparameterwerte des Benutzers ein positives Ergebnis liefert.

Zu jedem Zeitpunkt kann ermittelt werden, zu welchen Benutzergruppen ein Benutzer zugeordnet ist. Dazu werden die Benutzerkennungen des jeweiligen Benutzers ermittelt. Für jede dieser Benutzerkennungen werden über eine Suche die Benutzergruppen ermittelt, in denen die jeweilige Benutzerkennung zugeordnet ist.

Die hier beschriebene datenverarbeitungstechnische Umsetzung eines rollenbasierten Zugriffssteuerungsinformationsmodell in einem Meta-Verzeichnis bietet den Vorteil einer leichten Nachvollziehbarkeit und Überschaubarkeit. Außerdem besteht ein weiterer Vorteil darin, daß Zuordnungen und Beziehungen der einzelnen Objektklassen redundanzfrei gespeichert werden. Die Zuordnungen können daher entweder direkt über Objektreferenzen oder indirekt über Suchabfragen ermittelt werden. Des weiteren ist die Zuordnung von Benutzern zu Rollen aufgrund der direkten Objektreferenz in der Objektklasse "User" 1 hinsichtlich Speicherverbrauch und Zugriffszeit optimiert. Zudem kommt eine Rollenzuordnung ohne Zeitbindung in der Praxis wesentlich häufiger vor als eine Rollenzuordnung mit Zeitbindung.

Darüber hinaus wird der Einsatz von Meta-Verzeichnissen zur automatischen Verwaltung von Benutzerkennungen und -gruppen in spezifischer Zielsystemen aufgrund der Modellierung der Benutzerkennungen und -gruppen in eigenen Objektklassen und aufgrund der Festlegung der Berechtigungsvergabe durch eine Zuordnung der Benutzerkennungen zu Benutzergruppen ermöglicht.

Die Anwendung der vorliegenden Erfindung ist nicht auf das hier beschriebene Ausführungsbeispiel beschränkt.

## Patentansprüche

1. Verfahren zur Steuerung des Zugriffs auf Ressourcen eines Datenverarbeitungssystems mit zumindest einer Datenverarbeitungsanlage, bei dem
- eine Mehrzahl von dem Datenverarbeitungssystem zugeordneten Datenbanken (DB1-DB3) mit benutzerindividuellen Daten miteinander zur Bildung einer einzigen resultierenden Benutzerdatenbank (MDIR) verknüpft wird,
- Zugriffsberechtigungen (M3) für durch die zumindest eine Datenverarbeitungsanlage (TSYS1-TSYSp) bereitgestellte Ressourcen (APP11-APPpn, MEM1-MEMp) mittels vordefinierter Benutzerrollen (M2) vergeben werden,
- zumindest einem Benutzer (M1) des Datenverarbeitungssystems zumindest eine Benutzerrolle (M2) zugeordnet wird.

2. Verfahren nach Anspruch 1,
bei dem mittels der vordefinierten Benutzerrollen (M2) Verantwortungsbereiche von Benutzern (M1) in Geschäftsprozessen festgelegt werden.

3. Verfahren nach einem der Ansprüche 1 oder 2,
bei dem die benutzerindividuellen Daten die zumindest eine dem zumindest einen Benutzer (M1) zugeordnete Benutzerrolle (M2) umfassen.

4. Verfahren nach einem der Ansprüche 1 bis 3,
bei dem die vordefinierten Benutzerrollen (M2) mittels eines Rollenkataloges zur Zuordnung verfügbar gemacht werden.

5. Verfahren nach einem der Ansprüche 1 bis 4,
bei dem die zumindest eine dem zumindest einen Benutzer (M1) zugeordnete Benutzerrolle (M2) durch eine der Datenverarbeitungsanlage (TSYS1-TSYSp) zugeordnete Schnittstelleneinrichtung (TSA1-TSAm) in applikationsspezifische Zugriffsberechtigungen für eine durch die Datenverarbeitungsanlage (TSYS1-TSYSp) bereitgestellte Programmanwendung (APP11-APPpn) aufgelöst werden.

6. Verfahren nach einem der Ansprüche 1 bis 5,
bei dem die zumindest eine dem zumindest einen Benutzer (M1) zugeordnete Benutzerrolle (M2) durch eine der Datenverarbeitungsanlage (TSYS1-TSYSp) zugeordnete Schnittstelleneinrichtung (TSA1-TSAm) in betriebssystemspezifische Zugriffsberechtigungen für Speicherbereiche eines Speichermediums (MEM1-MEMp) der Datenverarbeitungsanlage (TSYS1-TSYSp) aufgelöst werden.

7. Verfahren nach einem der Ansprüche 5 oder 6,
bei dem bei einer Änderung von rollendefinierenden benutzerindividuellen Daten in der Benutzerdatenbank (MDIR) eine die geänderten rollendefinierenden benutzerindividuellen Daten umfassende Meldung (MSG) an die Schnittstelleneinrichtung (TSA1-TSAm) übermittelt und durch diese auf eine Änderung von applikations- und/oder betriebssystemspezifischen Zugriffsberechtigungen überprüft wird.

8. Datenverarbeitungssystem mit
- zumindest einer Datenverarbeitungsanlage (TSYS1-TSYSp),
- einer Mehrzahl von Datenbanken (DB1-DB3), in denen benutzerindividuelle Daten gespeichert sind, und die miteinander zur Bildung einer einzigen resultierenden Benutzerdatenbank (MDIR) verknüpft sind,
- zumindest einem Mittel zur Vergabe von Zugriffsberechtigungen (M3) für durch die zumindest eine Datenverarbeitungsanlage (TSYS1-TSYSp) bereitgestellte Ressourcen (APP11-APPpn, MEM1-MEMp mittels vordefinierter Benutzerrollen (M2),
- zumindest einem Mittel zur Zuordnung von zumindest einem Benutzer (M1) des Datenverarbeitungssystems zu zumindest einer Benutzerrolle (M2).

9. Computerprogramm, das in einen Arbeitsspeicher einer Datenverarbeitungsanlage ladbar ist und zumindest einen Softwarecodeabschnitt aufweist, bei dessen Ausführung
- eine Mehrzahl von einem Datenverarbeitungssystem zugeordneten Datenbanken (DB1-DB3) mit benutzerindividuellen Daten miteinander zur Bildung einer einzigen resultierenden Benutzerdatenbank (MDIR) verknüpft werden,
- Zugriffsberechtigungen (M3) für durch zumindest eine Datenverarbeitungsanlage (TSYS1-TSYSp) bereitgestellte Ressourcen (APP11-APPpn, MEM1-MEMp) mittels vordefinierter Benutzerrollen (M2) vergeben werden,
- zumindest einem Benutzer (M1) des Datenverarbeitungssystems zumindest eine Benutzerrolle (M2) zugeordnet wird,
wenn das Computerprogramm auf der Datenverarbeitungsanlage abläuft.
